(19) Europäisches Patentamt
European Patent Office
Office européen des brevets

(11) **EP 4 783 712 A1**

(12) **EUROPEAN PATENT APPLICATION**
published in accordance with Art. 153(4) EPC

(43) Date of publication:
**29.07.2026 Bulletin 2026/31**

(21) Application number: **24868454.0**

(22) Date of filing: **25.07.2024**

(51) International Patent Classification (IPC):
*H04W 74/00* (2009.01)   *H04L 1/08* (2006.01)
*H04W 8/24* (2009.01)   *H04L 1/1812* (2023.01)
*H04W 72/21* (2023.01)   *H04W 72/1268* (2023.01)
*H04W 74/0833* (2024.01)

(52) Cooperative Patent Classification (CPC):
H04L 1/08; H04L 1/1812; H04W 8/24;
H04W 72/1268; H04W 72/21; H04W 74/00;
H04W 74/0833

(86) International application number:
**PCT/KR2024/010817**

(87) International publication number:
**WO 2025/063474 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.09.2023   US 202363539822 P**

(71) Applicant: **LG Electronics Inc.**
**Yeongdeungpo-gu**
**Seoul 07336 (KR)**

(72) Inventors:
• **SHIN, Seokmin**
  **Seoul 06772 (KR)**
• **YANG, Suckchel**
  **Seoul 06772 (KR)**

(74) Representative: **Plasseraud IP**
**104 Rue de Richelieu**
**CS92104**
**75080 Paris Cedex 02 (FR)**

(54) **APPARATUS AND METHOD FOR PERFORMING CAPABILITY REPORT FOR REPETITION OF MSG5 PUSCH TRANSMISSION IN WIRELESS COMMUNICATION SYSTEM**

(57)    According to various embodiments of the present disclosure, there is provided a method of operating a user equipment (UE) in a wireless communication system. The method comprises receiving, from a base station, a physical downlink shared channel (PDSCH) including message 4 (Msg4) of a random access (RA) procedure; transmitting, to the base station, specific information related to repetition transmissions of a physical uplink shared channel (PUSCH) including message 5 (Msg5) of the RA procedure based on a physical uplink control channel (PUCCH) related to hybrid automatic repeat request-acknowledgement (HARQ-ACK) for the PDSCH; and performing the repetition transmissions of the PUSCH including the Msg5 based on the specific information.

[FIG. 5]

Start

Receive PDSCH including Msg4 of RA procedure from base station — S510

Transmit specific information related to repetition transmissions of PUSCH including Msg5 of RA procedure to base station based on PUCCH related to HARQ-ACK for PDSCH — S520

Perform repetition transmissions of PUSCH including Msg5 based on specific information — S530

End

**Description**

[Technical Field]

The present disclosure relates to a wireless communication system. More particularly, the present disclosure relates to a device and method for performing a capability report for repetition of Msg5 PUSCH transmission in a wireless communication system.

[Background Art]

NR supports multiple numerologies (or subcarrier spacing (SCS)) for supporting diverse 5G services. For example, if the SCS is 15 kHz, the NR supports a wide area in traditional cellular bands; if the SCS is 30 kHz/60 kHz, the NR supports a dense-urban, lower latency, and wider carrier bandwidth, and if the SCS is 60 kHz or higher, the NR supports a bandwidth greater than 24.25 GHz to overcome phase noise.

Considering UL signal/channel in a RACH procedure, the UL signal/channel may include Msg1 PRACH, Msg3 PUSCH, Msg4 HARQ-ACK PUCCH, Msg5 PUSCH, or the like. Repetition transmission for Msg1 PRACH, Msg3 PUSCH, Msg4 HARQ-ACK PUCCH, etc. has been introduced or will be introduced through Rel-17 coverage enhancement and/or Rel-18 coverage enhancement. In addition, a UE, that enters a RRC connected state, can receive PUSCH-config via dedicated RRC signaling, and then can configure a base station to perform a repetition transmission for a PUSCH, that the UE receiving the PUSCH-config can transmit, through a semi-static method and/or a dynamic method. Therefore, repetition transmission for Msg5 PUSCH (which shall be transmitted before receiving the PUSCH-config) is not currently supported.

Therefore, the repetition transmission for Msg5 PUSCH may be considered in Rel-19 or after Rel-19, and the present disclosure proposes a capability report method in UE/base station operation to support this. The Msg5 PUSCH transmission mentioned in the present disclosure means an operation of PUSCH transmission that is dynamically configured/indicated via DCI format 0_0 scrambled with C-RNTI, etc., before a UE, that completes reception of Msg4 PDSCH transmitted by a base station and completes HARQ-ACK PUCCH transmission in response, receives dedicated RRC signaling including PUSCH-config.

[Disclosure]

[Technical Problem]

In order to solve the above-described problems, the present disclosure provides a device and method for configuring a repetition number of PUCCH transmission in a wireless communication system.

The present disclosure also provides a device and method for performing a capability report for repetition of Msg5 PUSCH transmission in a wireless communication system.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[Technical Solution]

According to various embodiments of the present disclosure, there is provided a method of operating a user equipment (UE) in a wireless communication system, the method comprising receiving, from a base station, a physical downlink shared channel (PDSCH) including message 4 (Msg4) of a random access (RA) procedure; transmitting, to the base station, specific information related to repetition transmissions of a physical uplink shared channel (PUSCH) including message 5 (Msg5) of the RA procedure based on a physical uplink control channel (PUCCH) related to hybrid automatic repeat request-acknowledgement (HARQ-ACK) for the PDSCH; and performing the repetition transmissions of the PUSCH including the Msg5 based on the specific information.

According to various embodiments of the present disclosure, there is provided a method of operating a base station in a wireless communication system, the method comprising transmitting, to a user equipment (UE), a physical downlink shared channel (PDSCH) including message 4 (Msg4) of a random access (RA) procedure; receiving, from the UE, specific information related to repetition transmissions of a physical uplink shared channel (PUSCH) including message 5 (Msg5) of the RA procedure based on a physical uplink control channel (PUCCH) related to hybrid automatic repeat request-acknowledgement (HARQ-ACK) for the PDSCH; and receiving, from the UE, the repetition transmissions of the PUSCH including the Msg5 based on the specific information.

According to various embodiments of the present disclosure, there is provided a user equipment (UE) in a wireless communication system, the UE comprising a transceiver, at least one processor, and at least one memory operably connectable to the at least one processor and storing instructions performing operations based on being executed by the at least one processor, and the operations comprise all steps of a method of operating the UE according to various embodiments of the present disclosure.

According to various embodiments of the present disclosure, there is provided a base station in a wireless communication system, the base station comprising a transceiver, at least one processor, and at least one memory operably connectable to the at least one processor and storing instructions performing operations based on being executed by the at least one processor, and the operations comprise all steps of a method of operating the base station according to various embodiments of the present disclosure.

According to various embodiments of the present disclosure, there is provided a control device controlling a user equipment in a wireless communication system, the control device comprising at least one processor and at least one memory operably connected to the at least one processor, and the at least one memory stores instructions performing operations based on being executed by the at least one processor, and the operations comprise all steps of a method of operating the user equipment according to various embodiments of the present disclosure.

According to various embodiments of the present disclosure, there is provided a control device controlling a base station in a wireless communication system, the control device comprising at least one processor and at least one memory operably connected to the at least one processor, and the at least one memory stores instructions performing operations based on being executed by the at least one processor, and the operations comprise all steps of a method of operating the base station according to various embodiments of the present disclosure.

According to various embodiments of the present disclosure, there are provided one or more non-transitory computer readable mediums storing one or more instructions, and the one or more instructions perform operations based on being executed by one or more processors, and the operations comprise all steps of a method of operating a user equipment according to various embodiments of the present disclosure.

According to various embodiments of the present disclosure, there are provided one or more non-transitory computer readable mediums storing one or more instructions, and the one or more instructions perform operations based on being executed by one or more processors, and the operations comprise all steps of a method of operating the base station according to various embodiments of the present disclosure.

[Advantageous Effects]

In order to solve the above-described problems, the present disclosure can provide a device and method for configuring a repetition number of PUCCH transmission in a wireless communication system.

The present disclosure can also provide a device and method for performing a capability report for repetition of Msg5 PUSCH transmission in a wireless communication system.

[Description of Drawings]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.

FIG. 1 illustrates physical channels used in a system applicable to the present disclosure and an example of a general signal transmission method using the physical channels.

FIG. 2 illustrates an example of a structure of a radio frame used in a system applicable to the present disclosure.

FIG. 3 illustrates an example of a slot structure used in a system applicable to the present disclosure.

FIG. 4 illustrates an example of a slot structure of a radio frame used in a system applicable to the present disclosure.

FIG. 5 illustrates an example of a process of operating a UE in a system applicable to the present disclosure.

FIG. 6 illustrates an example of a process of operating a base station in a system applicable to the present disclosure.

FIG. 7 illustrates an example of a structure of a first device and a second device in a system applicable to the present disclosure.

[Mode for Invention]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

### General Signal Transmission Method in 3GPP

### Physical Channels and General Signal Transmission

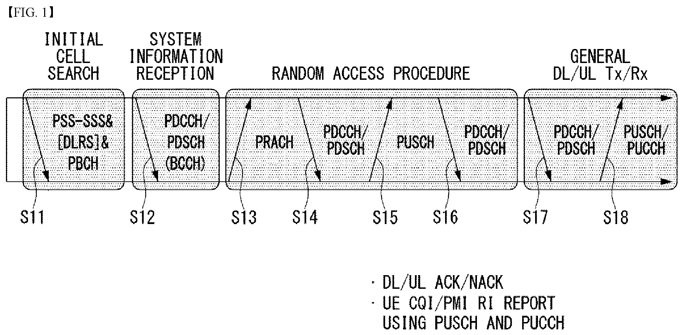

FIG. 1 illustrates physical channels used in a system applicable to the present disclosure and an example of a general signal transmission method using the physical channels. More specifically, FIG. 1 illustrates physical channels and general signal transmission used in the 3GPP system.

FIG. 1 illustrates physical channels and general signal transmission used in the 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

A UE that is powered on again while being powered off or enters a new cell performs an initial cell search operation such as synchronizing with a base station (BS) in S11. To this end, the UE receives a primary synchronization channel (PSCH) and a secondary synchronization channel (SSCH) from the base station to synchronize with the base station and acquires information such as a cell identity (ID), etc. Further, the UE may receive a physical broadcast channel (PBCH) from the base station and acquire in-cell broadcast information. The UE may receive a downlink reference signal (DL RS) in an initial cell search step to check a downlink channel state.

The UE that completes the initial cell search may receive a physical downlink control channel (PDCCH) and a physical downlink shared channel (PDSCH) corresponding to the PDCCH to acquire more detailed system information, in S12.

Next, the UE may perform a random access procedure in order to complete an access to the base station, in S13 to S16. Specifically, the UE may transmit a preamble on a physical random access channel (PRACH) in S13, and receive a random access response (RAR) for the preamble on the PDCCH and the PDSCH corresponding to the PDCCH in S14. Thereafter, the UE may transmit a physical uplink shared channel (PUSCH) using scheduling information within the RAR in S15, and perform a contention resolution procedure such as the PDCCH and the PDSCH corresponding to the PDCCH in S16.

Next, the UE that performs the above-described procedure may perform PDCCH/PDSCH reception S17 and PUSCH/physical uplink control channel (PUCCH) transmission S18, as a general uplink/downlink signal transmission procedure. Control information that the UE transmits to the base station is referred to as uplink control information (UCI). The UCI includes hybrid automatic repeat and request (HARQ) acknowledgement/negative ACK (ACK/NACK), scheduling request (SR), channel state information (CSI), etc. The CSI includes a channel quality indication (CQI), a precoding matrix indicator (PMI), a rank indicator (RI), etc. The UCI is generally transmitted on the PUCCH, but if control information and data need to be transmitted at the same time, the UCI may be transmitted on the PUSCH. The UE may aperiodically transmit the UCI on the PUSCH based on a request/indication of the network.

## Orthogonal Frequency Division Multiplexing (OFDM) Numerology

A new RAT system uses an OFDM transmission scheme or a similar transmission scheme thereto. The new RAT system may follow different OFDM parameters from OFDM parameters of LTE. Alternatively, the new RAT system may follow numerology of existing LTE/LTE-A as it is but have a larger system bandwidth (e.g., 100 MHz). Alternatively, one cell may support a plurality of numerologies. In other words, UEs that operate with different numerologies may coexist in one cell.

## Radio Frame Structure

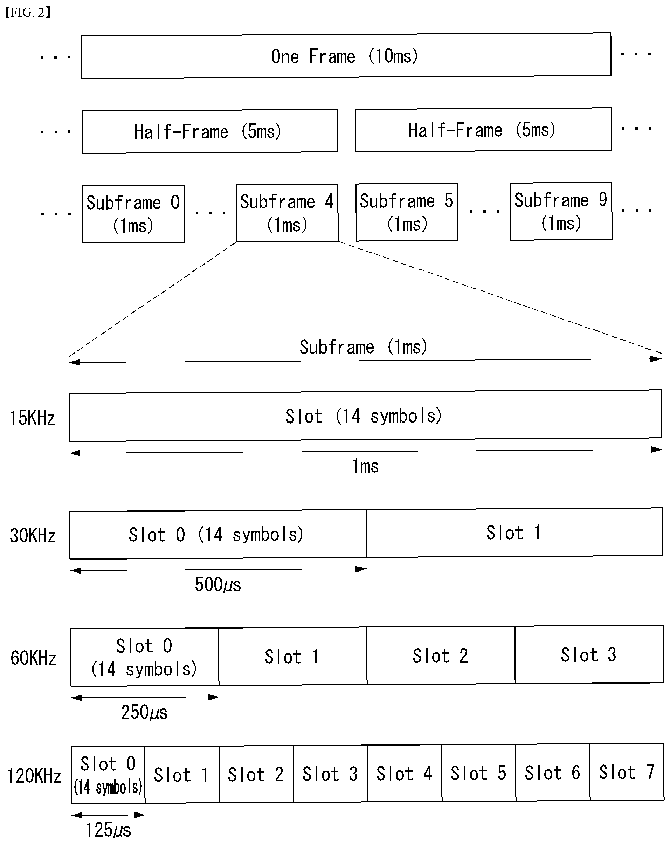

FIG. 2 illustrates an example of a structure of a radio frame used in a system applicable to the present disclosure.
In NR, uplink and downlink transmission consists of frames. A radio frame has a length of 10 ms and is defined as two 5 ms half-frames (HFs). The half-frame is defined as five 1 ms subframes (SFs). The subframe is split into one or more slots, and the number of slots in the subframe depends on a subcarrier spacing (SCS). Each slot includes 12 or 14 OFDM(A) symbols depending on a cyclic prefix (CP). When a normal CP is used, each slot includes 14 symbols. When an extended CP is used, each slot includes 12 symbols. The symbol may include an OFDM symbol (or CP-OFDM symbol) and an SC-FDMA symbol (or DFT-s-OFDM symbol).
Table 1 shows that when the normal CP is used, the number of symbols per slot, the number of slots per frame, and the number of slots per subframe vary depending on the SCS.

[Table 1]

| SCS ($15 \cdot 2^u$) | $N^{slots}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

$N^{slot}_{symb}$ is the number of symbols in the slot. $N^{frame,u}_{slot}$ is the number of slots in the frame. $N^{subframe,u}_{slot}$ is the number of slots in the subframe.
Table 2 shows that when the extended CP is used, the number of symbols per slot, the number of slots per frame, and the number of slots per subframe vary depending on the SCS.

[Table 2]

| SCS ($15 \cdot 2^u$) | $N^{slots}_{symb}$ | $N^{frame,u}_{slot}$ | $N^{subframe,u}_{slot}$ |
|---|---|---|---|
| 60KHz (u=2) | 12 | 40 | 4 |

The NR supports multiple numerologies (or subcarrier spacing (SCS)) for supporting diverse 5G services. For example, when the SCS is 15 kHz, a wide area in traditional cellular bands is supported, when the SCS is 30 kHz/60 kHz, dense-urban, lower latency, and wider carrier bandwidth are supported, and when the SCS is 60 kHz or more, a bandwidth larger than 24.25 GHz is supported to overcome phase noise.
An NR frequency band may be defined as two types of frequency ranges (FR1 and FR2). Values of the frequency ranges may be changed, and, for example, the two types of frequency ranges (FR1 and FR2) may be as shown in Table 3 below. For convenience of description, among frequency ranges used in an NR system, FR1 may denote "sub 6GHz range", and FR2 may denote "above 6GHz range" and may be referred to as millimeter wave (mmW).

[Table 3]

| Frequency Range Designation | Corresponding Frequency Range | Subcarrier Spacing |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, FR1 may include a frequency band from 410 MHz to 7125 MHz, as shown in Table 4 below. That is, FR1 may include a frequency band of 6 GHz (or 5850, 5900, 5925 MHz, etc.) or higher. For example, the frequency band of 6 GHz (or 5850, 5900, 5925 MHz, etc.) or higher included in FR1 mat include an unlicensed band. The unlicensed band may be used for diverse purposes, for example, used for communication for vehicles (e.g., self-driving).

[Table 4]

| Frequency Range Designation | Corresponding Frequency Range | Subcarrier Spacing |
|---|---|---|
| FR1 | 410MHz - 7125MHz | 15, 30, 60kHz |
| FR2 | 24250MHz - 52600MHz | 60, 120, 240kHz |

In the NR system, OFDM(A) numerology (e.g., SCS, CP length, etc.) may be differently configured between a plurality of cells merged into one UE. Hence, an (absolute time) duration of a time resource (e.g., SF, slot or TTI) (for convenience, collectively referred to as a time unit (TU)) consisting of the same number of symbols may be configured differently between the merged cells.

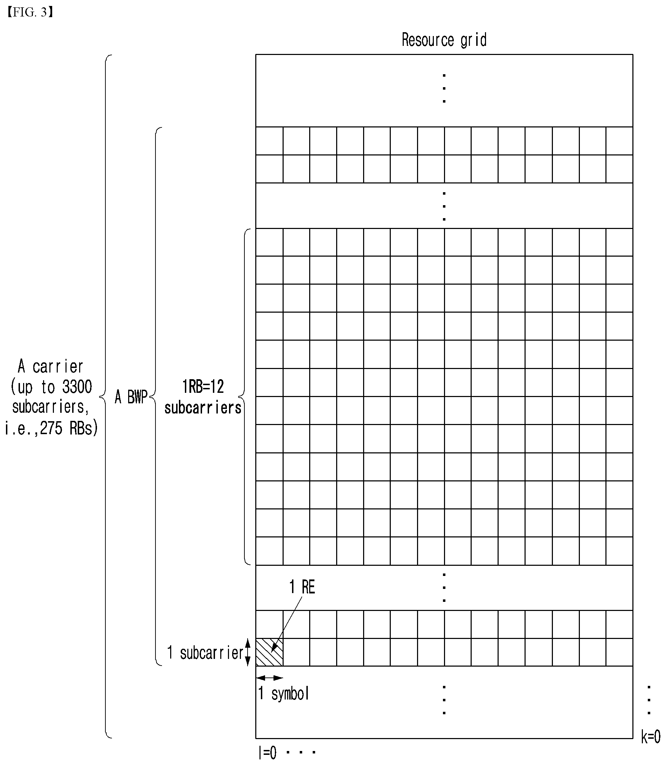

FIG. 3 illustrates an example of a slot structure used in a system applicable to the present disclosure.

A slot includes a plurality of symbols in a time domain. For example, one slot includes 7 symbols in a normal CP, while one slot includes 6 symbols in an extended CP. A carrier includes a plurality of subcarriers in a frequency domain. A resource block (RB) is defined as a plurality of (e.g., 12) consecutive subcarriers in the frequency domain. A bandwidth part (BWP) is defined as a plurality of consecutive (P)RBs in the frequency domain and may correspond to one numerology (e.g., SCS, CP length, etc.). The carrier may include up to N (e.g., 5) BWPs. The data communication may be performed through an activated BWP, and only one BWP may be activated in one UE. In a resource grid, each element is referred to as a resource element (RE), and one complex symbol may be mapped to each RE.

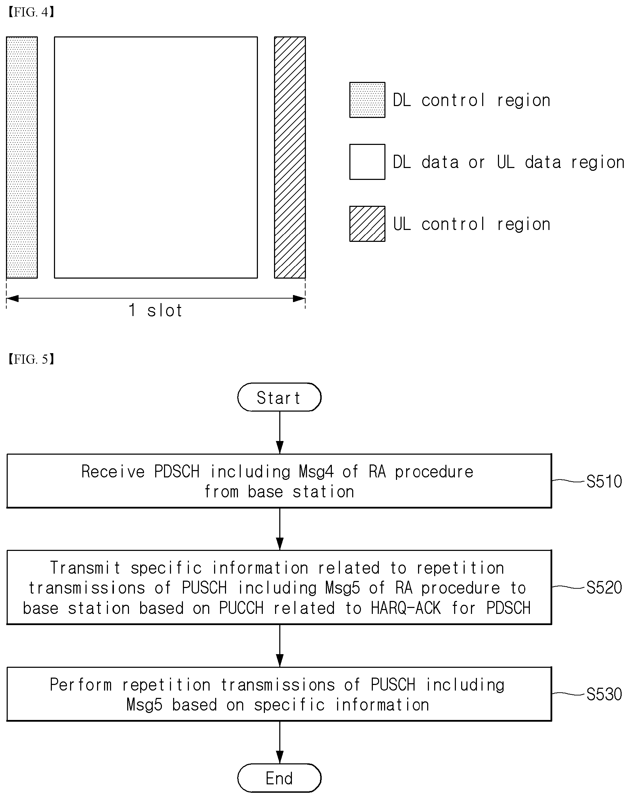

FIG. 4 illustrates an example of a slot structure of a radio frame used in a system applicable to the present disclosure.

More specifically, FIG. 4 illustrates a slot structure of a frame of the NR system as an exemplary system.

As illustrated in FIG. 4, a frame structure of NR is characterized by a self-contained structure in which all of DL control channel, DL or UL data, UL control channel, etc. can be included in one slot. In this instance, DL data scheduling information, UL data scheduling information, etc. may be transmitted on the DL control channel, and ACK/NACK information for DL data, CSI information (modulation and coding scheme information, MIMO transmission related information, etc.), scheduling request, etc. may be transmitted on the UL control channel. In FIG. 4, a time gap for DL-to-UL or UL-to-DL switching may exist between a control region and a data region. Further, a part of the DL control channel/DL data/UL data/UL control channel may not be configured within one slot. Alternatively, order of the channels constituting one slot may vary. (e.g., DL control/DL data/UL control/UL data or UL control/UL data/DL control/DL data, etc.)

## Composition and Method of the Invention

The above-described contents (NR frame structure, RACH, U-Band system, etc.) can be applied by being combined with methods described in the present disclosure, or can be supplemented to clarify technical features of methods proposed in the present disclosure described below.

In addition, methods related to configuration of a PRACH transmission occasion described below are related to uplink transmission and can be equally applied to an uplink signal transmission method in the NR system (licensed band) or the U-Band system (unlicensed band) described above. The technical ideas described in the present disclosure can be modified or replaced to suit terms, expressions, structures, etc. defined in each system so that they can be implemented in the corresponding systems.

For example, the uplink transmission through the methods related to configuration of the PRACH transmission occasion described below can be performed in an L-cell and/or a U-cell defined in the NR system or the U-Band system.

NR supports multiple numerologies (or subcarrier spacing (SCS)) for supporting diverse 5G services. For example, if the SCS is 15 kHz, the NR supports a wide area in traditional cellular bands; if the SCS is 30 kHz/60 kHz, the NR supports a dense-urban, lower latency, and wider carrier bandwidth; and if the SCS is 60 kHz or higher, the NR supports a bandwidth greater than 24.25 GHz to overcome phase noise.

Considering UL signal/channel in a RACH procedure, the UL signal/channel may include Msg1 PRACH, Msg3 PUSCH, Msg4 HARQ-ACK PUCCH, Msg5 PUSCH, or the like. Repetition transmission for Msg1 PRACH, Msg3 PUSCH, Msg4 HARQ-ACK PUCCH, etc. has been introduced or will be introduced through Rel-17 coverage enhancement and/or Rel-18 coverage enhancement. In addition, a UE, that enters a RRC connected state, can receive PUSCH-config via dedicated RRC signaling, and then can configure a base station to perform a repetition transmission for a PUSCH, that the UE receiving the PUSCH-config can transmit, through a semi-static method and/or a dynamic method. Therefore, repetition transmission for Msg5 PUSCH (which shall be transmitted before receiving the PUSCH-config) is not currently supported.

Therefore, the repetition transmission for Msg5 PUSCH may be considered in Rel-19 or after Rel-19, and the present disclosure proposes a capability report method in UE/base station operation to support this. The Msg5 PUSCH transmission mentioned in the present disclosure means an operation of PUSCH transmission that is dynamically configured/indicated via DCI format 0_0 scrambled with C-RNTI, etc., before a UE, that completes reception of Msg4 PDSCH transmitted by a base station and completes HARQ-ACK PUCCH transmission in response, receives dedicated RRC signaling including PUSCH-config.

## 1. Capability report for Msg5 PUSCH repeated transmission

If a base station enables Msg5 PUSCH repeated transmission via higher layer signaling (e.g., SIB, etc.), a Msg5 PUSCH capable UE needs to report a relevant capability to the base station. In other words, the base station can notify that a corresponding cell is a cell supporting Msg5 PUSCH repetition, via higher layer signaling (e.g., SIB, etc.). If the base station notifies it, the UE needs to report to the base station that it is a UE with Msg5 PUSCH repetition capability.

### 1.1. Proposed method 1: Report method using physical layer signaling in Msg4 HARQ-ACK PUCCH

This is a capability report method for Msg5 PUSCH repeated transmission, and may be configured to report through Msg4 HARQ-ACK PUCCH, which is UL channel transmitted most recently by a UE. Characteristically, Msg4 HARQ-ACK PUCCH information is transmitted using PUCCH format 0 and/or PUCCH format 1, and both the formats perform multiplexing between UEs based on different cyclic shift (CS) index values. Specifically, according to chapter 6.3.3.2.2 in 3GPP TS (technical specification) 38.211, the cyclic shift value used in the PUCCH format is defined.

[Chapter 6.3.3.2.2 in 3GPP TS 38.211]

The cyclic shift $\alpha$ varies as a function of the symbol and slot number according to

$$\alpha_l = \frac{2\pi}{N_{\text{sc}}^{\text{RB}}}\left(\left(m_0 + m_{\text{cs}} + m_{\text{int}} + n_{\text{cs}}\left(n_{\text{s,f}}^{\mu}, l + l'\right)\right) \bmod N_{\text{sc}}^{\text{RB}}\right)$$

where

- $n_{\text{s,f}}^{\mu}$ is the slot number in the radio frame
- $l$ is the OFDM symbol number in the PUCCH transmission where $l = 0$ corresponds to the first OFDM symbol of the PUCCH transmission,
- $l'$ is the index of the OFDM symbol in the slot that corresponds to the first OFDM symbol of the PUCCH transmission in the slot given by [5, TS 38.213])
- $m_0$ is given by [5, TS 38.213] for PUCCH format 0 and 1 while for PUCCH format 3 and 4 is defined in clause 6.4.1.3.3.1
- $m_{\text{cs}} = 0$ except for PUCCH format 0 when it depends on the information to be transmitted according to clause 9.2 of [5, TS 38.213].
- $m_{\text{int}}$ is given by
- $m_{\text{int}} = 5n_{\text{IRB}}^{\mu}$ for PUCCH formats 0 and 1 if PUCCH shall use interlaced mapping according to any of the higher-layer parameters *useInterlacePUCCH-PUSCH* in *BWP-UplinkCommon* or *useInterlacePUCCH-PUSCH* in *BWP-Uplink-Dedicated,* where $n_{\text{IRB}}^{\mu}$ is the resource block number within the interlace;
- $m_{\text{int}} = 0$ otherwise

When a UE, which is performing an initial access procedure, fails to receive a dedicated PUCCH resource configuration, the UE multiplexes with other UEs and uses different CS values in PUCCH format 0 and PUCCH format 1 to transmit HARQ-ACK PUCCH. In this instance, among the above parameters, the Initial CS index (i.e., m_0) value is used, and m_0 value to be used for each PUCCH resource is configured/indicated as a value called an initial CS index through Table 9.2.1-1 in 3GPP TS 38.213.

[Table 9.2.1-1 of Chapter 9.2.1 in 3GPP TS 38.211]

| Table 9.2.1-1: PUCCH resource sets before dedicated PUCCH resource configuration | | | | | |
|---|---|---|---|---|---|
| Index | PUCCH format | First symbol | Number of symbols | PRB offset $RB_{\mathrm{BWP}}^{\mathrm{offset}}$ | Set of initial CS indexes |
| 0 | 0 | 12 | 2 | 0 | {0, 3} |
| 1 | 0 | 12 | 2 | 0 | {0, 4, 8} |
| 2 | 0 | 12 | 2 | 3 | {0, 4, 8} |
| 3 | 1 | 10 | 4 | 0 | {0, 6} |
| 4 | 1 | 10 | 4 | 0 | {0, 3, 6, 9} |
| 5 | 1 | 10 | 4 | 2 | {0, 3, 6, 9} |
| 6 | 1 | 10 | 4 | 4 | {0, 3, 6, 9} |
| 7 | 1 | 4 | 10 | 0 | {0, 6} |
| 8 | 1 | 4 | 10 | 0 | {0, 3, 6, 9} |
| 9 | 1 | 4 | 10 | 2 | {0, 3, 6, 9} |
| 10 | 1 | 4 | 10 | 4 | {0, 3, 6, 9} |
| 11 | 1 | 0 | 14 | 0 | {0, 6} |
| 12 | 1 | 0 | 14 | 0 | {0, 3, 6, 9} |
| 13 | 1 | 0 | 14 | 2 | {0, 3, 6, 9} |
| 14 | 1 | 0 | 14 | 4 | {0, 3, 6, 9} |
| 15 | 1 | 0 | 14 | $\lfloor N_{\mathrm{BWP}}^{\mathrm{size}}/4 \rfloor$ | {0, 3, 6, 9} |

Therefore, multiple UEs may be configured to perform a capability report for Msg5 PUSCH repeated transmission using CS index value other than CS index used in Msg4 HARQ-ACK PUCCH, which can be transmitted through the multiplexing.

Specifically, it may be configured to define a delta CS value that can be used by the UE which intends to perform the capability report for Msg5 PUSCH repeated transmission. In this instance, a base station may indicate, as a cell common value, the delta CS value suitable for an initial PUCCH resource value used in the corresponding cell via SIB. In this instance, the delta CS value may be 1 or 2 or 3 or 6 (per initial PUCCH resource set index). The base station may be configured to appropriately select and indicate the CS values so that the CS values do not overlap between the UEs performing the multiplexing.

Alternatively, the delta CS value may be configured to be predefined in the spec. If the delta CS value is predefined, the delta CS value may be 1 or 2 or 3 or 6, etc. And, the delta CS value may be defined as only one value in common for all the initial PUCCH resource set indexes (i.e., 16 indexes in Table 9.2.1-1), or may be defined independently for each index, or may be defined independently depending on the number of sets of initial CS indexes or depending on values of the sets of initial CS indexes.

For example, if only one delta CS value is commonly defined in all the initial PUCCH resource set indexes (i.e., 16 indexes in Table 9.2.1-1), the delta CS value may be set to 1. That is, among legacy UEs and/or enhanced UEs, a UE without Msg5 PUSCH repetition transmission capability (or UE that does not need to request the Msg5 PUSCH repeated transmission) may be defined to use the initial CS value (e.g., {CS0, CS1, CS2, CS3}) as before. Among the enhanced UEs, a UE with Msg5 PUSCH repetition transmission capability (or UE that needs to request the Msg5 PUSCH repeated transmission) may be defined to use the delta CS value 1 added to the existing set/defined initial CS value (e.g., {CS0+delta CS, CS1+delta CS, CS2+delta CS, CS3+delta CS}, delta CS = 1).

For another example, if the delta CS values are defined independently of each other based on the values of the sets of initial CS indexes, it may be described as follows.

(1) If the value of the set of initial CS indexes is {0, 3}, the delta CS value may be defined as 6.

(1-1) Even if it is a legacy UE and/or an enhanced UE, a UE without Msg5 PUSCH repetition transmission capability (or UE that does not need to request the Msg5 PUSCH repeated transmission) will use one of {0, 3} as before,
(1-2) A UE with Msg5 PUSCH repetition transmission capability (or UE that needs to request the Msg5 PUSCH repeated transmission) among the enhanced UEs will use one of {6, 9}.

(2) If the value of the set of initial CS indexes is {0, 4, 8}, the delta CS value may be defined as 2.

(2-1) Even if it is a legacy UE and/or an enhanced UE, a UE without Msg5 PUSCH repetition transmission capability (or UE that does not need to request the Msg5 PUSCH repeated transmission) will use one of {0, 4, 8} as before,
(2-2) A UE with Msg5 PUSCH repetition transmission capability (or UE that needs to request the Msg5 PUSCH repeated transmission) among the enhanced UEs will use one of {2, 6, 10}.

(3) If the value of the set of initial CS indexes is {0, 6}, the delta CS value may be defined as 3.

(3-1) Even if it is a legacy UE and/or an enhanced UE, a UE without Msg5 PUSCH repetition transmission capability (or UE that does not need to request the Msg5 PUSCH repeated transmission) will use one of {0, 6} as before,
(3-2) A UE with Msg5 PUSCH repetition transmission capability (or UE that needs to request the Msg5 PUSCH repeated transmission) among the enhanced UEs will use one of {3, 9}.

(4) If the value of the set of initial CS indexes is {0, 3, 6, 9}, the delta CS value may be defined as 1.

(4-1) Even if it is a legacy UE and/or an enhanced UE, a UE without Msg5 PUSCH repetition transmission capability (or UE that does not need to request the Msg5 PUSCH repeated transmission) will use one of {0, 3, 6, 9} as before,
(4-2) A UE with Msg5 PUSCH repetition transmission capability (or UE that needs to request the Msg5 PUSCH repeated transmission) among the enhanced UEs will use one of {1, 4, 7, 10}.

If a delta CS value that can be used for Msg5 PUSCH repetition capability report is introduced, a new parameter related to this may be added to 3GPP TS. For example, the parameter may be configured to be activated when Msg5 PUSCH repetition is enabled in cell specific configuration (e.g., SIB), and to be used as 0 otherwise. In addition, when the Msg5 PUSCH repetition is enabled in the cell specific configuration (e.g., SIB) and the UE has Msg5 PUSCH repetition capability and needs to report it to the base station, a new UE behavior may be defined to apply $m_{delta}$ in addition to $m_0$ as a CS value when transmitting Msg4 HARQ-ACK PUCCH, and otherwise, set (or ignore) $m_{delta}$ to 0.

As an additional proposed method, it may be defined in the PUCCH format 1 that two complex-valued modulation symbols that can be obtained through BPSK modulation are used to indicate ACK/NACK. Since only ACK is defined to be transmitted when transmitting Msg4 HARQ-ACK PUCCH, the complex-valued modulation symbol to be used when indicating NACK may be configured to be used for the Msg5 PUSCH repetition capability report. Specifically, complex-valued modulation symbol d(i) of BPSK modulation defined in 3GPP TS 38.211 is defined as follows based on bit value b(i).

[Chapter 5.1.2 in 3GPP TS 38.211]

5.1.2 BPSK

In case of BPSK modulation, bit *b*(*i*) is mapped to complex-valued modulation symbol *d*(*i*) according to

$$d(i) = \frac{1}{\sqrt{2}}\left[\left(1 - 2b(i)\right) + j\left(1 - 2b(i)\right)\right]$$

That is, in case of ACK, b(i) is 0, and d(i) is $\frac{1}{\sqrt{2}}(1 + j)$. In the case of NACK, b(i) is 1, and d(i) is $\frac{1}{\sqrt{2}}(-1 - j)$. Therefore, since the UE uses only the ACK when transmitting the Msg4 HARQ-ACK PUCCH, complex-valued modulation symbol $\frac{1}{\sqrt{2}}(1 + j)$ is only used, and complex-valued modulation symbol $\frac{1}{\sqrt{2}}(-1 - j)$ for the NACK is not used.

As a result, in a situation where the UE is configured/indicated to transmit Msg4 HARQ-ACK PUCCH using PUCCH format 1, even if it is a legacy UE and/or an enhanced UE, a UE without Msg5 PUSCH repetition transmission capability (or UE that does not need to request the Msg5 PUSCH repeated transmission) may be defined to use b(i) as 0 when transmitting the ACK value of Msg4 HARQ-ACK PUCCH as before, and a UE with Msg5 PUSCH repetition transmission capability (or UE that needs to request the Msg5 PUSCH repeated transmission) among the enhanced UEs may be defined to set b(i) as 1 instead of 0 when transmitting the ACK value of Msg4 HARQ-ACK PUCCH (e.g., if i=0, set b(0)=1).

## 2. Other enhancements for Msg5 PUSCH repeated transmission

### 2.1. Frequency hopping for Msg5 PUSCH repeated transmission

Frequency hopping operation may be considered for Msg5 PUSCH repetition. In this instance, a base station may configure/indicate parameters for enabling/disabling inter-slot frequency hopping operation and/or intra-slot frequency hopping operation in a cell-specific form via SIB, etc. If the inter-slot frequency hopping operation and/or the intra-slot frequency hopping operation are indicated as 'enable', a UE may perform the inter-slot frequency hopping operation and/or the intra-slot frequency hopping operation when repeatedly transmitting Msg5 PUSCH. If it is indicated as 'disable', the UE may be configured not to perform the frequency hopping operation. In this case, a hopping pattern or hopping distance used may be configured to follow the frequency hopping operation of legacy PUSCH transmission.

### 2.2. Slot counting for Msg5 PUSCH repeated transmission

A new slot counting method may be considered for Msg5 PUSCH repetition. That is, an available slot counting method introduced in Rel-17 may also be considered for Msg5 PUSCH repetition. However, since a parameter that enables/disables the available slot counting introduced in Rel-17 is indicated BWP-specifically in a dedicated PUSCH configuration, it is difficult to reuse it for Msg5 PUSCH repetition. Therefore, a base station can be configured to provide a parameter that enables/disables the available slot counting for Msg5 PUSCH repetition in a cell-specific configuration (e.g., SIB). If the base station has enabled an available slot counting operation for Msg5 PUSCH repetition, the UE may be configured to secure PUSCH slots as much as a repetition factor configured/indicated by the base station based on the available slot counting method and perform the Msg5 PUSCH repetition. On the other hand, if the base station has disabled the available slot counting operation for Msg5 PUSCH repetition, the UE may be configured to secure PUSCH slots as much as a repetition factor configured/indicated by the base station based on a physical slot counting method and perform the Msg5 PUSCH repetition. Characteristically, the parameter that enables/disables the available slot counting operation may be defined to be configured/indicated only when the Msg5 PUSCH repetition has been enabled by the base station.

The proposed methods can be configured/applied to other UL signals/channels such as PRACH/PUSCH/-PUCCH. Since examples of the proposed methods described above can also be included as one of the implementation methods of the present disclosure, it is obvious that they can be considered as a kind of proposed methods. In addition, the proposed methods described above can be implemented independently, but can also be implemented in the form of a combination (or merge) of some proposed methods. Information on whether the proposed methods are applied (or information on rules of the proposed methods) may be defined as a rule so that the base station informs the UE via a predefined signal (e.g., a physical layer signal or a higher layer signal). For example, the higher layer may include one or more of functional layers such as MAC, RLC, PDCP, RRC, and SDAP.

Methods, embodiments, or descriptions for implementing the methods proposed in the present disclosure can be applied separately, or one or more methods (or embodiments or descriptions) can be applied in combination.

## [Description of claims related to UE]

Below, the above-described embodiments are described in detail from a perspective of an operation of a UE with reference to FIG. 5. Methods to be described below are merely distinguished for convenience of explanation. Thus, as long as the methods are not mutually exclusive, it is obvious that partial configuration of any method can be substituted or combined with partial configuration of another method.

FIG. 5 illustrates an example of an operation process of a UE in a system applicable to the present disclosure.

In step S510, a user equipment (UE) receives, from a base station (BS), a physical downlink shared channel (PDSCH) including message 4 (Msg4) of a random access (RA) procedure.

In step S520, the UE transmits, to the base station, specific information related to repetition transmissions of a physical uplink shared channel (PUSCH) including message 5 (Msg5) of the RA procedure based on a physical uplink control channel (PUCCH) related to hybrid automatic repeat request-acknowledgement (HARQ-ACK) for the PDSCH.

In step S530, the UE performs the repetition transmissions of the PUSCH including the Msg5 based on the specific information.

According to various embodiments of the present disclosure, the specific information may be a capability report of the UE for the repetition transmissions of the PUSCH including the Msg5.

According to various embodiments of the present disclosure, an embodiment of FIG. 5 may further comprise receiving, from the base station, a system information block (SIB) including a delta cyclic shift (CS) for the specific information. The specific information may be transmitted based on the delta CS.

According to various embodiments of the present disclosure, a value of the delta CS for the UE may be configured not to overlap between UEs that perform multiplexing with respect to the base station.

According to various embodiments of the present disclosure, the delta CS may be based on a specific CS index different from a CS index for the PUCCH related to the HARQ-ACK for the PDSCH.

According to various embodiments of the present disclosure, the delta CS may be configured per initial PUCCH resource set index.

According to various embodiments of the present disclosure, the specific information may be transmitted based on a complex-valued modulation symbol for a transmission of negative acknowledgment (NACK) related to the HARQ-ACK for the PDSCH.

According to various embodiments of the present disclosure, there is provided a user equipment (UE) in a wireless communication system. The UE may include a transceiver and at least one processor, and the at least one processor may be configured to perform the operation method of the UE based on FIG. 5.

According to various embodiments of the present disclosure, there is provided a device controlling a user equipment (UE) in a wireless communication system. The device may include at least one processor and at least one memory operably connected to the at least one processor. The at least one memory may be configured to store instructions performing the operation method of the UE based on FIG. 5 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the UE based on FIG. 5.

**[Description of claims related to base station]**

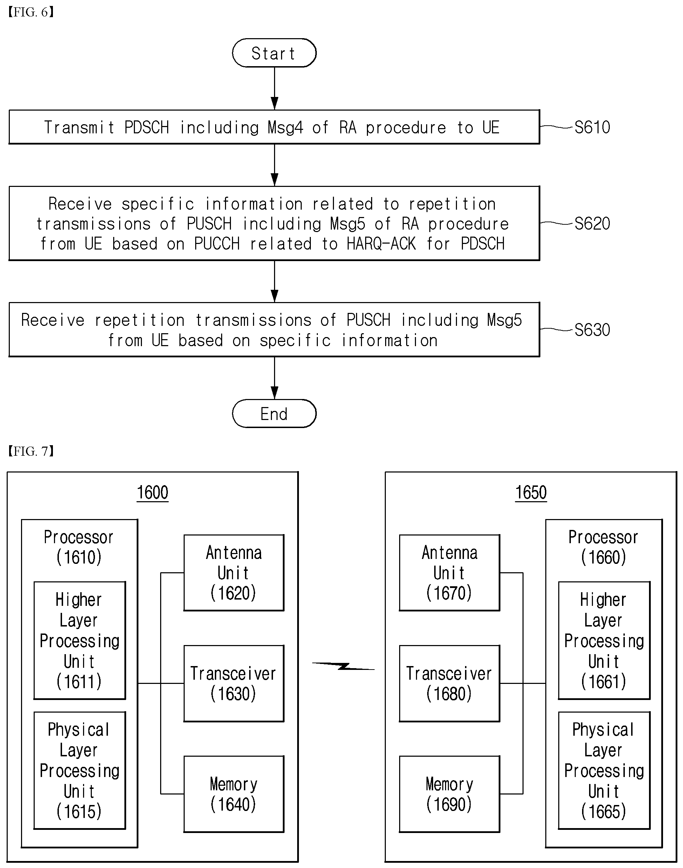

Below, the above-described embodiments are described in detail from a perspective of an operation of a base station with reference to FIG. 6. Methods to be described below are merely distinguished for convenience of explanation. Thus, as long as the methods are not mutually exclusive, it is obvious that partial configuration of any method can be substituted or combined with partial configuration of another method.

FIG. 6 illustrates an example of an operation process of a base station in a system applicable to the present disclosure.

In step S610, a base station transmits, to a user equipment (UE), a physical downlink shared channel (PDSCH) including message 4 (Msg4) of a random access (RA) procedure.

In step S620, the base station receives, from the UE, specific information related to repetition transmissions of a physical uplink shared channel (PUSCH) including message 5 (Msg5) of the RA procedure based on a physical uplink control channel (PUCCH) related to hybrid automatic repeat request-acknowledgement (HARQ-ACK) for the PDSCH.

In step S630, the base station receives, from the UE, the repetition transmissions of the PUSCH including the Msg5 based on the specific information.

According to various embodiments of the present disclosure, the specific information may be a capability report of the UE for the repetition transmissions of the PUSCH including the Msg5.

According to various embodiments of the present disclosure, an embodiment of FIG. 6 may further comprise transmitting, to the UE, a system information block (SIB) including a delta cyclic shift (CS) for the specific information. The specific information may be received based on the delta CS.

According to various embodiments of the present disclosure, a value of the delta CS for the UE may be configured not to overlap between UEs that perform multiplexing with respect to the base station.

According to various embodiments of the present disclosure, , the delta CS may be based on a specific CS index different from a CS index for the PUCCH related to the HARQ-ACK for the PDSCH.

According to various embodiments of the present disclosure, the delta CS may be configured per initial PUCCH resource set index.

According to various embodiments of the present disclosure, the specific information may be received based on a complex-valued modulation symbol for a reception of negative acknowledgment (NACK) related to the HARQ-ACK for the PDSCH.

According to various embodiments of the present disclosure, there is provided a base station in a wireless communication system. The base station may include a transceiver and at least one processor, and the at least one processor may be configured to perform the operation method of the BS based on FIG. 6.

According to various embodiments of the present disclosure, there is provided a device controlling a base station in a wireless communication system. The device may include at least one processor and at least one memory operably connected to the at least one processor. The at least one memory may be configured to store instructions performing the operation method of the BS based on FIG. 6 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the BS based on FIG. 6.

## Wireless device applicable to the present disclosure

Examples of wireless devices to which various embodiments of the present disclosure are applied are described below.

FIG. 7 illustrates an example of a structure of a first device and a second device in a system applicable to the present disclosure.

A first device 1600 may include a processor 1610, an antenna unit 1620, a transceiver 1630, and a memory 1640.

The processor 1610 may perform baseband-related signal processing and include a higher layer processing unit 1611 and a physical layer processing unit 1615. The higher layer processing unit 1611 may process operations of the MAC layer, the RRC layer, or higher layers. The physical layer processing unit 1615 may process the operation of the PHY layer. For example, if the first device 1600 is a base station (BS) device in BS-UE communication, the physical layer processing unit 1615 may perform uplink reception signal processing, downlink transmission signal processing, and the like. For example, if the first device 1600 is a first UE device in inter-UE communication, the physical layer processing unit 1615 may performs downlink reception signal processing, uplink transmission signal processing, sidelink transmission signal processing, and the like. The processor 1610 may control the overall operation of the first device 1600 in addition to performing the baseband-related signal processing.

The antenna unit 1620 may include one or more physical antennas and support MIMO transmission/reception if the antenna unit 1620 includes a plurality of antennas. The transceiver 1630 may include a radio frequency (RF) transmitter and an RF receiver. The memory 1640 may store information processed by the processor 1610 and software, operating systems, and applications related to the operation of the first device 1600. The memory 1640 may also include components such as a buffer.

The processor 1610 of the first device 1600 may be configured to implement the operation of the BS in the BS-UE communication (or the operation of the first UE device in the inter-UE communication) in embodiments described in the present disclosure.

The second device 1650 may include a processor 1660, an antenna unit 1670, a transceiver 1680, and a memory 1690.

The processor 1660 may perform baseband-related signal processing and include a higher layer processing unit 1661 and a physical layer processing unit 1665. The higher layer processing unit 1661 may process the operation of the MAC layer, the RRC layer, or higher layers. The physical layer processing unit 1665 may process the operation of the PHY layer. For example, if the second device 1650 is a UE device in BS-UE communication, the physical layer processing unit 1665 may perform downlink reception signal processing, uplink transmission signal processing, and the like. For example, if the second device 1650 is a second UE device in inter-UE communication, the physical layer processing unit 1665 may perform downlink reception signal processing, uplink transmission signal processing, sidelink reception signal processing, and the like. The processor 1660 may control the overall operation of the second device 1660 in addition to performing the baseband-related signal processing.

The antenna unit 1670 may include one or more physical antennas and support MIMO transmission/reception if the antenna unit 1670 includes a plurality of antennas. The transceiver 1680 may include an RF transmitter and an RF receiver. The memory 1690 may store information processed by the processor 1660 and software, operating systems, and applications related to the operation of the second device 1650. The memory 1690 may also include components such as a buffer.

The processor 1660 of the second device 1650 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 1600 and the second device 1650, and redundant descriptions are omitted.

Wireless communication technologies implemented in the devices 1600 and 1650 according to the present disclosure may include LTE, NR, and 6G, as well as various other wireless communication technologies.

The claims described in various embodiments of the present disclosure can be combined in various ways. For example, technical features of the method claims of various embodiments of the present disclosure can be combined and implemented as a device, and technical features of the device claims of various embodiments of the present disclosure can be combined and implemented as a method. In addition, the technical features of the method claims and the technical features of the device claims in various embodiments of the present disclosure can be combined and implemented as a device, and the technical features of the method claims and the technical features of the device claims in various embodiments of the present disclosure can be combined and implemented as a method.

**Claims**

1. A method of operating a user equipment (UE) in a wireless communication system, the method comprising:

   receiving, from a base station, a physical downlink shared channel (PDSCH) including message 4 (Msg4) of a random access (RA) procedure;
   transmitting, to the base station, specific information related to repetition transmissions of a physical uplink shared channel (PUSCH) including message 5 (Msg5) of the RA procedure based on a physical uplink control channel (PUCCH) related to hybrid automatic repeat request-acknowledgement (HARQ-ACK) for the PDSCH; and
   performing the repetition transmissions of the PUSCH including the Msg5 based on the specific information.

2. The method of claim 1, wherein the specific information is a capability report of the UE for the repetition transmissions of the PUSCH including the Msg5.

3. The method of claim 1, further comprising receiving, from the base station, a system information block (SIB) including a delta cyclic shift (CS) for the specific information,
   wherein the specific information is transmitted based on the delta CS.

4. The method of claim 3, wherein a value of the delta CS for the UE is configured not to overlap between UEs that perform multiplexing with respect to the base station.

5. The method of claim 3, wherein the delta CS is based on a specific CS index different from a CS index for the PUCCH related to the HARQ-ACK for the PDSCH.

6. The method of claim 3, wherein the delta CS is configured per initial PUCCH resource set index.

7. The method of claim 1, wherein the specific information is transmitted based on a complex-valued modulation symbol for a transmission of negative acknowledgment (NACK) related to the HARQ-ACK for the PDSCH.

8. A method of operating a base station in a wireless communication system, the method comprising:

   transmitting, to a user equipment (UE), a physical downlink shared channel (PDSCH) including message 4 (Msg4) of a random access (RA) procedure;
   receiving, from the UE, specific information related to repetition transmissions of a physical uplink shared channel (PUSCH) including message 5 (Msg5) of the RA procedure based on a physical uplink control channel (PUCCH) related to hybrid automatic repeat request-acknowledgement (HARQ-ACK) for the PDSCH; and
   receiving, from the UE, the repetition transmissions of the PUSCH including the Msg5 based on the specific information.

9. The method of claim 8, wherein the specific information is a capability report of the UE for the repetition transmissions of the PUSCH including the Msg5.

10. The method of claim 8, further comprising transmitting, to the UE, a system information block (SIB) including a delta cyclic shift (CS) for the specific information,
    wherein the specific information is received based on the delta CS.

11. The method of claim 10, wherein a value of the delta CS for the UE is configured not to overlap between UEs that perform multiplexing with respect to the base station.

12. The method of claim 10, wherein the delta CS is based on a specific CS index different from a CS index for the PUCCH related to the HARQ-ACK for the PDSCH.

13. The method of claim 10, wherein the delta CS is configured per initial PUCCH resource set index.

14. The method of claim 8, wherein the specific information is received based on a complex-valued modulation symbol for a reception of negative acknowledgment (NACK) related to the HARQ-ACK for the PDSCH.

15. A user equipment (UE) in a wireless communication system, the UE comprising:

    a transceiver;
    at least one processor; and
    at least one memory operably connectable to the at least one processor and storing instructions performing operations based on being executed by the at least one processor,
    wherein the operations comprise all steps of a method according to any one of claims 1 to 7.

16. A base station in a wireless communication system, the base station comprising:

    a transceiver;
    at least one processor; and
    at least one memory operably connectable to the at least one processor and storing instructions performing operations based on being executed by the at least one processor,
    wherein the operations comprise all steps of a method according to any one of claims 8 to 14.

17. A control device controlling a user equipment in a wireless communication system, the control device comprising:

    at least one processor; and
    at least one memory operably connected to the at least one processor,
    wherein the at least one memory stores instructions performing operations based on being executed by the at least one processor, and
    wherein the operations comprise all steps of a method according to any one of claims 1 to 7.

18. A control device controlling a base station in a wireless communication system, the control device comprising:

    at least one processor; and
    at least one memory operably connected to the at least one processor,
    wherein the at least one memory stores instructions performing operations based on being executed by the at least one processor, and
    wherein the operations comprise all steps of a method according to any one of claims 8 to 14.

19. One or more non-transitory computer readable mediums storing one or more instructions,

    wherein the one or more instructions perform operations based on being executed by one or more processors, and
    wherein the operations comprise all steps of a method according to any one of claims 1 to 7.

20. One or more non-transitory computer readable mediums storing one or more instructions,

    wherein the one or more instructions perform operations based on being executed by one or more processors, and
    wherein the operations comprise all steps of a method according to any one of claims 8 to 14.

【FIG. 1】

INITIAL CELL SEARCH — PSS-SSS& [DLRS]& PBCH — S11

SYSTEM INFORMATION RECEPTION — PDCCH/ PDSCH (BCCH) — S12

RANDOM ACCESS PROCEDURE — PRACH (S13), PDCCH/ PDSCH (S14), PUSCH (S15), PDCCH/ PDSCH (S16)

GENERAL DL/UL Tx/Rx — PDCCH/ PDSCH (S17), PUSCH/ PUCCH (S18)

· DL/UL ACK/NACK
· UE CQI/PMI RI REPORT USING PUSCH AND PUCCH

【FIG. 2】

【FIG. 3】

[FIG. 4]

DL control region

DL data or UL data region

UL control region

1 slot

[FIG. 5]

Start

Receive PDSCH including Msg4 of RA procedure from base station — S510

Transmit specific information related to repetition transmissions of PUSCH including Msg5 of RA procedure to base station based on PUCCH related to HARQ-ACK for PDSCH — S520

Perform repetition transmissions of PUSCH including Msg5 based on specific information — S530

End

[FIG. 6]

```
              ( Start )
                 |
                 v
+-----------------------------------------+
| Transmit PDSCH including Msg4 of RA      |---S610
| procedure to UE                          |
+-----------------------------------------+
                 |
                 v
+-----------------------------------------+
| Receive specific information related to  |
| repetition transmissions of PUSCH        |---S620
| including Msg5 of RA procedure from UE   |
| based on PUCCH related to HARQ-ACK for   |
| PDSCH                                    |
+-----------------------------------------+
                 |
                 v
+-----------------------------------------+
| Receive repetition transmissions of     |
| PUSCH including Msg5 from UE based on    |---S630
| specific information                     |
+-----------------------------------------+
                 |
                 v
              ( End )
```

[FIG. 7]

## INTERNATIONAL SEARCH REPORT

| International application No. |
| --- |
| **PCT/KR2024/010817** |

| A. | CLASSIFICATION OF SUBJECT MATTER |
| --- | --- |

**H04W 74/00**(2009.01)i; **H04L 1/08**(2006.01)i; **H04W 8/24**(2009.01)i; **H04L 1/1812**(2023.01)i; **H04W 72/21**(2023.01)i; **H04W 72/1268**(2023.01)i; **H04W 74/0833**(2024.01)i

According to International Patent Classification (IPC) or to both national classification and IPC

| B. | FIELDS SEARCHED |
| --- | --- |

Minimum documentation searched (classification system followed by classification symbols)

H04W 74/00(2009.01); H04L 1/18(2006.01); H04L 5/00(2006.01); H04W 68/02(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 랜덤 액세스(random access), 절차(procedure), Msg4, Msg5, 반복 전송(repetition transmission), HARQ(hybrid automatic repeat request), ACK(acknowledge)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | KR 10-2021-0030999 A (SAMSUNG ELECTRONICS CO., LTD.) 18 March 2021 (2021-03-18)<br>See paragraph [0196]; and figure 9. | 1-20 |
| A | KR 10-2023-0091814 A (ELECTRONICS AND TELECOMMUNICATIONS RESEARCH INSTITUTE) 23 June 2023 (2023-06-23)<br>See paragraphs [0067]-[0157]; claims 1-20; and figures 3-6. | 1-20 |
| A | KR 10-2019-0125499 A (LG ELECTRONICS INC.) 06 November 2019 (2019-11-06)<br>See paragraphs [0060]-[0173]; claims 1-13; and figures 7-11. | 1-20 |
| A | US 2022-0368499 A1 (SONY GROUP CORPORATION) 17 November 2022 (2022-11-17)<br>See paragraphs [0031]-[0128]; and figures 1-11B. | 1-20 |
| A | US 2022-0418001 A1 (ESSEN INNOVATION COMPANY LIMITED) 29 December 2022 (2022-12-29)<br>See paragraphs [0038]-[0313]; and figures 1-9. | 1-20 |

| ☐ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 November 2024** | **14 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 783 712 A1**

## INTERNATIONAL SEARCH REPORT
### Information on patent family members

International application No.

**PCT/KR2024/010817**

| Patent document cited in search report | | | Publication date (day/month/year) | Patent family member(s) | | | Publication date (day/month/year) |
|---|---|---|---|---|---|---|---|
| KR | 10-2021-0030999 | A | 18 March 2021 | CN | 110831197 | A | 21 February 2020 |
| | | | | CN | 110831197 | B | 10 October 2023 |
| | | | | CN | 117202375 | A | 08 December 2023 |
| | | | | EP | 3821676 | A1 | 19 May 2021 |
| | | | | EP | 3821676 | B1 | 05 July 2023 |
| | | | | EP | 4231732 | A2 | 23 August 2023 |
| | | | | EP | 4231732 | A3 | 15 November 2023 |
| | | | | US | 11997739 | B2 | 28 May 2024 |
| | | | | US | 2021-0298108 | A1 | 23 September 2021 |
| | | | | WO | 2020-032659 | A1 | 13 February 2020 |
| KR | 10-2023-0091814 | A | 23 June 2023 | | None | | |
| KR | 10-2019-0125499 | A | 06 November 2019 | CN | 110537392 | A | 03 December 2019 |
| | | | | CN | 110537392 | B | 30 May 2023 |
| | | | | EP | 3606269 | A1 | 05 February 2020 |
| | | | | JP | 2020-510371 | A | 02 April 2020 |
| | | | | KR | 10-2019-0125499 | A | 06 November 2019 |
| | | | | US | 11129190 | B2 | 21 September 2021 |
| | | | | US | 2021-0112590 | A1 | 15 April 2021 |
| | | | | WO | 2018-174577 | A1 | 27 September 2018 |
| US | 2022-0368499 | A1 | 17 November 2022 | CN | 114208346 | A | 18 March 2022 |
| | | | | EP | 3991490 | A1 | 04 May 2022 |
| | | | | WO | 2021-023530 | A1 | 11 February 2021 |
| US | 2022-0418001 | A1 | 29 December 2022 | CN | 116261876 | A | 13 June 2023 |
| | | | | CN | 116868626 | A | 10 October 2023 |
| | | | | TW | 202211709 | A | 16 March 2022 |
| | | | | TW | 202214030 | A | 01 April 2022 |
| | | | | US | 2022-0377798 | A1 | 24 November 2022 |
| | | | | WO | 2022-028432 | A1 | 10 February 2022 |
| | | | | WO | 2022-028436 | A1 | 10 February 2022 |

Form PCT/ISA/210 (patent family annex) (July 2022)